# EUROPÄISCHE PATENTSCHRIFT

(11) **EP 2 753 586 B1**
(45) Veröffentlichungstag und Bekanntmachung des Hinweises auf die Patenterteilung: **18.10.2017**
(21) Anmeldenummer: 12769978.3
(22) Anmeldetag: 10.09.2012
(51) Int. Cl.: C02F 11/04, C02F 3/12, C02F 3/28, C02F 101/10

(54) **VERFAHREN ZUR BEHANDLUNG VON KLÄRSCHLAMM UND ABWASSERBEHANDLUNGSANLAGE**
METHOD FOR TREATING SEWAGE SLUDGE AND WASTEWATER TREATMENT PLANT
PROCÉDÉ DE TRAITEMENT DE BOUES RÉSIDUAIRES ET INSTALLATION DE TRAITEMENT D'EAUX D'ÉGOUT

(30) Priorität: 09.09.2011 DE 102011112780
(43) Veröffentlichungstag der Anmeldung: 16.07.2014
(73) Patentinhaber: CNP-Technology Water and Biosolids GmbH, 22143 Hamburg (DE)
(72) Erfinder: SIEVERS, Michael, 38678 Clausthal-Zellerfeld (DE); BORMANN, Hinnerk, 38690 Vienenburg (DE)
(74) Vertreter: Gerstein, Hans Joachim
(86) Internationale Anmeldenummer: PCT/EP2012/067653
(87) Internationale Veröffentlichungsnummer: WO 2013/034765

(56) Entgegenhaltungen:
- EP-A2- 0 799 811
- WO-A1-88/04282

## Beschreibung

Die Erfindung betrifft ein Verfahren zur Behandlung von Klärschlamm mit den Behandlungsschritten der Hydrolyse des Klärschlamms und der Faulung des der Hydrolyse unterzogenen hydrolysierten Klärschlamms zur anaeroben Behandlung des Klärschlamms, sowie mit einem Schritt der Abtrennung von Phosphat aus dem mindestens teilweise behandelten Klärschlamm.

Die Erfindung betrifft weiterhin eine Abwasserbehandlungsanlage zur Behandlung von Klärschlämmen mit einem solchen Verfahren mit einer Hydrolysevorrichtung zur Hydrolysebehandlung von Klärschlamm, einem Faulbehälter zur anaeroben Behandlung von Klärschlamm durch Faulung, und mit einer Abtrennvorrichtung zum Abtrennen von Phosphat aus dem Klärschlamm.

Bei der Abwasserbehandlung entsteht in der Regel Klärschlamm (Primär-, Belebt- und Tertiärschlamm), der in konzentrierter Form einen Großteil der aus dem Abwasser eliminierten Inhaltsstoffe enthält. Dies umfasst Pflanzennährstoffe wie Phosphor und Stickstoff, sowie organische und anorganische Inhaltsstoffe. Zur Stabilisierung und Volumenreduktion von Klärschlämmen wird eine anaerobe Behandlung in Faulbehältern vorgenommen. Bei dieser Schlammfaulung werden durch den Abbau von organischem Substrat neben dem entstehenden Faulgas auch organisch gebundene Stickstoff- und Phosphorverbindungen freigesetzt. Diese Verfahren und die Abtrennung von Phosphat sind in "Auswirkungen der thermischen Klärschlammhydrolyse und der prozessintegrierten Nährstoffrückgewinnung auf die Stoffstrom- und Energiebilanzen auf Kläranlagen", Abschlussbericht AZ 24507-23, H. Bormann, M. Sievers, W. Ewert, herausgegeben durch Deutsche Bundesstiftung Umwelt, 2010 (http://www.dbu.de/projekt_24507/_db_1036.html) beschrieben. Die Phosphatabtrennung aus dem Abwasser erfolgt in der Praxis durch chemische Fällung mit Eisen-/Aluminiumsalzen oder durch vermehrte biologische P-Aufnahme in Mikroorganismen (Bio-P). Zur Steigerung des Phosphor-Rückgewinnungspotentials wird eine thermische Hydrolyse von Überschussschlamm und eine nachfolgende separate Überschussschlamm-Faulung vorgeschlagen. Bei der thermischen Hydrolyse kommt es zu einer teilweisen Rücklösung von Phosphor und Stickstoff aus den Feststoffen des Überschussschlamms. Eine Phosphat-Rückgewinnung erfolgt durch Phosphatfällung des rückgelösten Phosphor-Anteils im anaerob behandelten Überschussschlamms.

D. Stumpf: "Phosphor Recycling durch MAP-Fällung im kommunalen Faulschlamm", Umweltbundesamt Berlin, 2007 beschreibt verschiedene Verfahren und Apparate zur Abtrennung von Phosphor durch Fällung von Magnesium-Ammonium-Phosphat (MAP) aus Klärschlamm. Herkömmlicherweise erfolgt dies nach der anaeroben Behandlung von Klärschlamm, d. h. von Überschussschlamm und/oder Primärschlamm. Die MAP-Fällung wird in der Regel mit Fällungsreaktoren oder Fließbettreaktoren durchgeführt, bei denen der pH-Wert durch Laugenzugabe oder durch Luftstrippung erhöht wird. MAP wird herkömmlich direkt aus dem Faulschlamm oder aus Prozesswasser der Schlammentwässerung ausgefällt. Das ausgefällte MAP kann dann durch Siebe, Hydrozyklon oder Zentrifugen abgetrennt werden. Es muss dann u. U. weiter aufbereitet werden, um z. B. als Düngemittel eingesetzt werden zu können.

Durch die nach abgeschlossenem Faulprozess durchgeführten Verfahren zum Abtrennen von Magnesium-Ammonium-Phosphat (MAP) werden unerwünschte Kristallisationen verhindert, die häufig zu Betriebsstörungen führen können. Dabei wird die bekannte Tatsache ausgenutzt, dass nach Anwendung der biologischen Phosphateliminierung ein großer Teil der gespeicherten Polyphosphate im Überschussschlamm im Austausch gegen organische Säuren als ortho-Phosphate unter anaeroben Bedingungen zurückgelöst werden. Dieser Effekt wird bei der Phosphatrückgewinnung genutzt, indem die Phosphate entweder im ausgefaulten Schlamm oder im abgetrennten Schlammwasser als Magnesium-Ammonium-Phosphat (MAP) gefällt und abgetrennt werden. Als Magnesiumquelle dient in der Regel Magnesiumchlorid, Magnesiumoxid oder Magnesiumhydroxid.

Bei der Phosphatrücklösung aus dem Überschussschlamm oder Rohschlamm werden die unter anaeroben Bedingungen auftretenden Phosphataustauschprozesse vorgezogen. Nachteilig dabei ist, dass mit relativ großem Volumina gearbeitet werden muss und relativ geringe Phosphatkonzentrationen erhalten werden.

EP 1 364 915 A1 offenbart ein Verfahren zur Reduktion von Phosphat aus Klärschlamm. Dabei wird Abwasser nach der anaeroben Behandlung einer aeroben Behandlung zugeführt und aus einem Absetzbecken rückgeführter Schlamm einer anaeroben Behandlung unterzogen. Die Flüssigphase wird dann einer Vorrichtung zum Abtrennen von Phosphat zugeführt, wie z. B. einem MAP-Reaktor.

WO 2009/112208 A2 offenbart ein Verfahren zur Abwasserbehandlung und einer Abwasserbehandlungsanlage hierzu, bei dem hydrolysierter und anschließend anaerob behandelter Überschussschlamm zum Abtrennen von Phosphat einer Fällungseinheit zugeführt wird. Dort wird Magnesium-Ammonium-Phosphat (MAP) aus dem aufbereiteten hydrolysierten und anaerob behandelten Überschussschlamm durch Zugabe von Magnesiumsalzen unter Einstellung eines passenden pH-Wertes von 7,5 bis 7,8 ausgefällt.

EP 0 799 811 A2 offenbart ein Verfahren zur Hausmüllbehandlung durch Absieben einer Feinfraktion und Entfernen von in Erdstoffen aus der Feinfraktion. Die von den in Erdstoffen befreite Phase wird einer anaeroben Behandlung unterzogen, bei der durch Hydrolyse und saure Gärung die in der Phase enthaltenen Metalle gelöst und in eine weitgehend hydrolysierte wasserlösliche Form überführt werden. Diese wässrige Phase wird dann von dem Restschlamm abgetrennt und es werden Schwermetalle ausgefällt.

WO 88/04282 A1 offenbart ein Verfahren zur Strukturierung von Abwasser durch Hydrolyse konditionierten Klärschlamms. Der hydrolysierte Klärschlamm wird dann chemisch konditioniert, um Chemikalien, wie Phosphate z.B. durch Hinzufügen von Eisenchlorid zu entfernen. Anschließend werden nicht biologisch abbaubare Partikel z.B. durch Zentrifugen entfernt.

Ausgehend hiervon ist es Aufgabe der vorliegenden Erfindung, ein verbessertes Verfahren zur Behandlung von Klärschlamm sowie eine verbesserte Abwasserbehandlungsanlage zur Behandlung von Klärschlämmen mit einem solchen Verfahren zu schaffen.

Die Aufgabe wird mit dem Verfahren mit den Merkmalen des Anspruchs 1 sowie mit der Abwasserbehandlungsanlage mit den Merkmalen des Anspruchs 9 gelöst.

Vorteilhafte Ausführungsformen sind in den Unteransprüchen beschrieben. Es wird ausgenutzt, dass die Abtrennung von Phosphat nach dem Behandlungsschritt der Hydrolyse und vor dem Behandlungsschritt der Faulung des hydrolysierten Klärschlamms erfolgt. Dabei wird der durch die Abtrennung von Phosphat um diesen abgetrennten Phosphatanteil verminderte Klärschlamm der anaeroben Behandlung durch Faulung zugeführt.

Das Phosphat wird im Behandlungsschritt des Abtrennens von Phosphat aus einem Klärschlammgemisch oder aus Schlammwasser als Flüssigphase nach einer vorhergehenden Trennung von Fest- und Flüssigphase aus dem Klärschlamm abgetrennt.

Es erfolgt eine Rückführung einer Teilmenge des mindestens teilweise anaerob im Schritt der Faulung behandelten Klärschlamms, z.B. in Form abgetrennter Flüssigphase. Die Teilmenge sollte so gewählt sein, dass eine ausreichende Menge Ammonium für die Fällung des Phosphates zur Verfügung steht. Dies hat u.U. den Nebeneffekt, dass der pH-Wert angehoben wird, so dass der Einsatz zusätzlicher Mittel zur notwendigen pH-Wert-Anhebung reduziert werden kann.

Unter Klärschlamm im Sinne der vorliegenden Erfindung wird Abwasser einschließlich industrielles Prozesswasser in jeder beliebigen Stufe der Aufbereitung, wie z. B. Primärschlamm, Überschussschlamm oder Schlammwasser verstanden.

Durch das Abtrennen von Phosphat vor der anaeroben Behandlung durch Faulung wird die Verfaulung verbessert und überraschenderweise eine höhere Gasausbeute erzielt.

Unter Phosphat im Sinne der vorliegenden Erfindung werden jegliche phosphathaltigen Verbindungen und Gemische einschließlich Magnesium-Ammonium-Phosphat (MAP) verstanden.

Das Abtrennen von Phosphat vor der Faulung erfolgt gemäß der Lehre der vorliegenden Erfindung nach dem Schritt der Hydrolyse. Dabei wird ausgenutzt, dass der Phosphatgehalt im Hydrolysat durch die Hydrolyse erhöht ist. Nach der Hydrolyse liegen eigentlich keine optimalen Bedingungen zum Abtrennen von Phosphat, insbesondere keine optimalen Fällbedingungen, im hydrolysierten Klärschlamm vor. Es hat sich aber gezeigt, dass dieser Nachteil durch geeignete Verfahrensführungen und insbesondere durch den überraschenden Effekt einer verbesserten Faulgasausbeute gut ausgeglichen werden kann.

Durch die Abtrennung von Phosphat nach der Hydrolyse und vor der Faulung wird zudem erreicht, dass unerwünschte Kristallisationen, die zu Betriebsstörungen führen können, vermieden werden.

Für die Hydrolyse eignet sich insbesondere die thermische Hydrolyse oder thermisch/chemische Hydrolyse.

Die Abtrennung von Phosphat erfolgt vorzugsweise durch Fällung unter Zugabe von Metallsalzen, insbesondere von magnesiumhaltigen Fällmittel, dass allgemein als Magnesium bezeichnet wird. Als Magnesium-Fällmittel kann z. B. Magnesiumchlorid, Magnesiumoxid oder Magnesiumhydroxid eingesetzt werden.

Die Abtrennung von Phosphat erfolgt vorzugsweise durch Ausfällen von Magnesium-Ammonium-Phosphat (MAP) aus dem hydrolysierten Klärschlamm.

Besonders vorteilhaft ist es, wenn eine Teilmenge von mindestens anaerob im Schritt der Faulung behandelten Klärschlamm zu dem hydrolysierten Klärschlamm vor oder während des Behandlungsschritts der Abtrennung von Phosphat zurückgeführt wird. Damit lassen sich die für eine Fällung von MAP erforderlichen Bedingungen unter Reduktion von hierfür erforderlichen Zusatzstoffen bis hin zum Entfall einstellen.

Die Abtrennung von Phosphat nach der Hydrolyse, jedoch vor der Faulung hat an sich den Nachteil, dass der pH-Wert des hydrolysierten Klärschlamms für das Abtrennen von Phosphat zu niedrig ist. Zudem werden im Vorgang der Faulung zusätzliche organische Feststoffe abgebaut, die an sich zu einer weitergehenden Freisetzung von Phosphat führen und damit eine höhere Phosphatkonzentration für das Ausfällen von Phosphat nach dem Schritt der Faulung ermöglichen würden. Weiterhin liegt nach der Faulung gelöstes Ammonium deutlich überstöchiometrisch vor, so dass der Fällmittelbedarf an sich bei einem Abtrennen von Phosphat nach dem Schritt der Faulung geringer wäre.

Das Abtrennen von Phosphat vor der Faulung wird zunächst einmal unter weniger optimalen Bedingungen, als das Abtrennen von Phosphat nach der Faulung durchgeführt. Durch die teilweise Rückführung von ausgefaultem Klärschlamm gelingt es jedoch, den pH-Wert des hydrolysierten Klärschlamms zu erhöhen und die ansonsten erforderliche Zugabe von Lauge und Säure bis hin zum Verzicht zu minimieren. Weiterhin gelingt es durch Rückführung einer Teilmenge von mindestens teilweise anaerob behandelten Klärschlamms, den Ammonium-Gehalt des hydrolysierten Klärschlamms, aus dem Phosphat abgetrennt wird, ohne separate Zugabe von Ammonium oder unter reduzierter Zugabe von Ammonium so weit zu erhöhen, dass eine optimierte Fällung von Magnesium-Ammonium-Phosphat (MAP) ermöglicht wird.

Das Abtrennen von Phosphat aus Schlammwasser hat den Vorteil, dass eine den Bedarf angepasste Kristallgröße gezüchtet werden kann. Dies bietet die Möglichkeit einer vereinfachten Sedimentation oder Filtration der abzutrennenden Kristalle. Im Vergleich zur herkömmlichen Fällung von Phosphat nach der Faulung ist eine relativ feine und homogene Kristallstruktur erzeugbar, wodurch die Abtrenneffizienz begünstigt wird. Zudem können weitgehend saubere Kristalle gewonnen werden, die keiner zusätzlichen Wäsche bedürfen.

Im Vergleich hierzu hat das Abtrennen von Phosphat aus hydrolysiertem Schlamm im Vergleich zum Abtrennen aus verfaultem Schlamm den Vorteil, dass das Verhältnis von Kristallstruktur zur Schlammpartikelstruktur bei der MAP-Fällung im Hydrolysat deutlich anders ist, so dass hierdurch eine verbesserte MAP-Kristallabtrennung z. B. mittels Zentrifugendekanter aus dem Schlammgemisch und damit eine höhere Ausbeute realisiert werden kann.

Zudem werden Störfälle in der maschinellen MAP-Abtrennung vermieden, weil die Kristallstruktur im Vergleich zur MAP-Fällung nach der Faulung relativ fein ist und keine großen Kristalle gezüchtet werden.

Besonders vorteilhaft ist es, wenn der dem Behandlungsschritt der Hydrolyse, des Abtrennens von Phosphat und der Faulung unterzogene Klärschlamm Überschussschlamm ohne Anteile von Primärschlamm ist.

Das Rückführen einer Teilmenge von teilweise anaerob im Schritt der Faulung behandelten Klärschlamm zu dem hydrolysierten Klärschlamm vor oder während des Behandlungsschritts der Abtrennung von Phosphat umfasst auch die besonders vorteilhafte Ausführungsform des erfindungsgemäßen Verfahrens, bei der die Durchführung der MAP-Fällung in einer Kurzzeit-Hochlast-Anaerob-Stufe mit simultaner MAP-Fällung erfolgt. Dabei wird gleichzeitig methanhaltiges Faulgas erzeugt. Die in der anaeroben Hochlaststufe im Vergleich zum reinen Fällungsreaktor größere Aufenthaltszeit des Hydrolysats ermöglicht ergänzend die Erzeugung und Abtrennung von größeren, sedimentierbaren Kristallen. Weiterhin wird durch die teilweise Faulung des Hydrolysats ausreichend Ammonium freigesetzt, so dass die Rückführung von Faulschlamm minimiert werden kann. Ein weiterer Vorteil ist, dass durch den teilweisen Abbau der organischen Säuren, die bei der Hydrolyse entstehen, bereits eine ausreichende pH-Verschiebung stattfindet.

Die Aufgabe wird weiterhin durch eine Abwasserbehandlungsanlage der eingangs genannten Art dadurch gelöst, dass die Abtrennvorrichtung zwischen die Hydrolysevorrichtung und den Faulbehälter geschaltet ist, so dass Phosphat aus dem hydrolysierten Klärschlamm abgetrennt (abgezogen) und der durch die Abtrennung von Phosphat um diesen abgetrennten Phosphatanteil verminderte Klärschlamm der anaeroben Behandlung durch Faulung zugeführt wird.

Für den Vorgang des Abtrennens von Phosphat durch Fällung wird Ammonium benötigt. Als NH₄-Quelle kann z. B. Ammoniakwasser genutzt werden.

Besonders vorteilhaft ist es, wenn die Hydrolysevorrichtung zur Hydrolysebehandlung von Klärschlamm so eingerichtet ist, dass der pH-Wert des hydrolysierten Klärschlamms bereits mehr als 7 beträgt und bevorzugt im Bereich von 10 bis 12 liegt. Alternativ oder zusätzlich hierzu kann die chemisch-thermische Hydrolysebehandlung auch so eingestellt werden, dass die Temperatur des hydrolysierten Klärschlamms bei der Hydrolyse mehr als 60°C beträgt und bevorzugt im Bereich von 70°C bis 90°C liegt. Damit werden bereits für den nachfolgenden Schritt des Ausfällens von Phosphat optimierte Bedingungen für die Rücklösung von Phosphat und Ausfällung von MAP sichergestellt. Dieses Verfahren bietet sich insbesondere für eine chemisch-thermische Hydrolyse unter Einsatz von Wärmeenergie (thermisch) und Chemikalien als Zusatzstoffe an.

Denkbar ist auch die Option, dass die Hydrolysevorrichtung zur Hydrolysebehandlung von Klärschlamm derart eingerichtet ist, dass die Temperatur des hydrolysierten Klärschlamms bei der Hydrolyse mehr als 100°C beträgt und bevorzugt im Bereich von 120°C bis 170°C liegt. Dies hat den Vorteil, dass auch eine Hydrolyse von stark eingedicktem Klärschlamm möglich ist. Zudem ermöglicht dies eine Reduzierung (chemisch-thermische Hydrolyse) und ggf. den Entfall (d.h. eine rein thermische Hydrolyse) des Zusatzes von Chemikalien.

Während die Hydrolyse bei einer Temperatur von weniger als 100°C drucklos unter Atmosphärendruck stattfindet, erfolgt die Hydrolyse bei einer Temperatur von mehr als 100°C unter Überdruck oberhalb des Atmosphärendrucks, d.h. mit dem in einem Druckbehälter der Hydrolysevorrichtung vorliegenden Dampfdruck.

Die Erfindung wird nachfolgend anhand von Ausführungsbeispielen mit den beigefügten Zeichnungen näher erläutert. Es zeigen:
- Figur 1: - Blockdiagramm einer ersten Ausführungsform des Verfahrens zur Behandlung von Klärschlamm;
- Figur 2: - Blockdiagramm einer zweiten Ausführungsform des Verfahrens zur Behandlung von Klärschlamm;
- Figur 3: - Blockdiagramm einer dritten Ausführungsform des Verfahrens zur Behandlung von Klärschlamm;
- Figur 4: - Skizze einer ersten Ausführungsform einer Abwasserbehandlungsanlage zur Behandlung von Klärschlamm und Abtrennung von Phosphat;
- Figur 5: - Skizze einer zweiten Ausführungsform einer Abwasserbehandlungsanlage zur Behandlung von Klärschlamm und Abtrennung von Phosphat;
- Figur 6: - Diagramm der Ausbeute von Methangas über die Zeit mit und ohne vorhergehende Abtrennung von MAP.

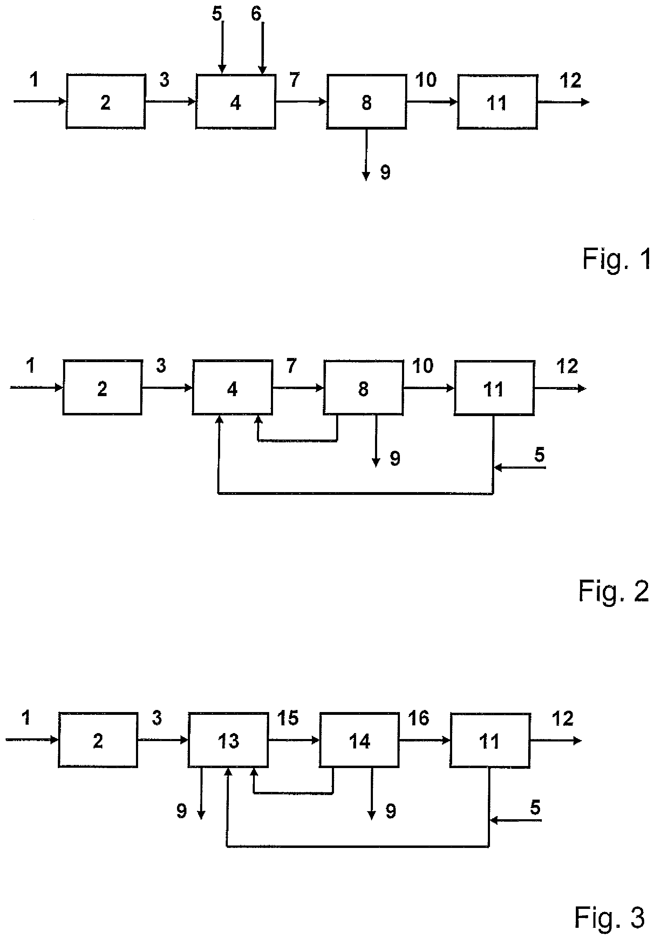

Figur 1 lässt ein Blockdiagramm einer ersten Ausführungsform eines Verfahrens zur Behandlung von Klärschlamm erkennen. Dabei wird Klärschlamm 1 in Form von Primärschlamm und/oder Überschussschlamm einer Hydrolyse 2 zugeführt. Die Hydrolyse 2 kann beispielsweise eine thermische Hydrolyse oder eine thermisch-chemische Hydrolyse sein. Es hat sich gezeigt, dass bei der thermischen Hydrolyse unter Behandlung des Klärschlamms 1 für etwa 30 min bei einer Temperatur von 120°C bis 180°C eine sehr hohe Konzentration von ortho-Phosphat gebildet wird. Eine Kristallisation von Magnesium-Ammonium-Phosphat (MAP) findet in diesem Bereich kaum statt, da noch keine anaerobe Umsetzung stattgefunden hat und somit nur wenig Ammonium gebildet wurde, dass zur MAP-Kristallisation notwendig ist.

Nach der Hydrolyse 2 liegt hydrolysierter Klärschlamm 3 vor, der in der Praxis einen pH-Wert von etwa 5 bis 6 aufweist. Dies ist zu gering für die Bildung von MAP im nachfolgenden Schritt des Abtrennens 4 von MAP z. B. durch Fällung. Für den Schritt des Abtrennens 4 von Phosphat durch Fällung erfolgt eine Zugabe von Fällmittel 5, wie z. B. MgO, d. h. von Metallsalzen. Weiterhin erfolgt eine Zugabe von ammoniumhaltiger Lösung 6.

Das nunmehr MAP-Kristalle enthaltene Hydrolysat 7 wird dann einer maschinellen MAP-Abtrennung 8 zugeführt. Die maschinelle MAP-Abtrennung ist an sich bekannt und kann beispielsweise mit einer Zentrifuge durchgeführt werden. Das durch die maschinelle Abtrennung von Magnesium-Ammonium-Phosphat (MAP) gewonnene MAP 9 wird abgeführt und kann einer weiteren Verwertung ggf. nach weiterer Aufbereitung zugeführt werden.

Der um das abgetrennte Phosphat in Form des phosphathaltigen Gemisches MAP 9 reduzierte und hydrolysierte Klärschlamm 10, d. h. das phosphatarme Hydrolysat, wird anschließend einer anaeroben Behandlung durch Faulung 11 z. B. in einem Faulbehälter zugeführt. Am Ausgang der Faulung liegt dann Faulschlamm 12 vor, der entsorgt oder weiter aufbereitet werden kann.

Figur 2 lässt eine zweite Ausführungsform des Verfahrens zur Behandlung von Klärschlamm erkennen. Hierbei wird im Prozess der Faulung 11 mindestens teilweise ausgefaulter Klärschlamm oder Schlammwasser teilweise in den Prozess des Abtrennens 4 von Phosphat zurückgeführt. Dabei kann Fällmittel 5 in den zurückgeführten, mindestens teilweise ausgefaulten Schlamm oder Schlammwasser eingemischt werden, wie beispielsweise Magnesium-Salze, insbesondere MgO. Auf diese Weise kann die Zugabe von Lauge und Säure bis hin zum Verzicht minimiert werden und dennoch eine für die Fällung von MAP erforderliche Erhöhung des pH-Wertes des hydrolysierten Klärschlamms 3 erzielt werden.

Weiterhin ist bei dieser Variante im Unterschied zur ersten Ausführungsform gemäß Figur 1 eine mindestens teilweise Rückführung von phosphathaltigen Kristallen, insbesondere feinkörnigem MAP zu dem Schritt des Abscheidens 4 von Phosphat, d. h. in den Fällungsreaktor. Damit kann die Kristallisation im Fällungsreaktor unterstützt und verbessert werden.

Figur 3 lässt eine dritte Ausführungsform des Verfahrens zur Behandlung von Klärschlamm und zum Abtrennen von Phosphat erkennen, die von der Verfahrensführung mit der Ausführungsform gemäß Figur 2 vergleichbar ist. Auch hier wird eine Teilmenge von mindestens teilweise ausgefaultem und bereits hydrolysierten Klärschlamm aus der Faulung 11 dem Schritt des Abtrennens von Phosphat oder phosphathaltigen Gemischen, insbesondere MAP 9, zurückgeführt.

Bei dieser Ausführungsform erfolgt die Abtrennung von Phosphat durch Fällung in einer separaten anaeroben Hochlastfaulung 13 sowie in einer nachgeschalteten mechanischen Trennstufe 14 für den nunmehr in der Hochlastfaulung 13 bereits teilverfaulten Klärschlamm 15 mit MAP-Kristallen. Der phosphatarme, teilverfaulte Klärschlamm 16 wird anschließend einem Schritt der Faulung 4 in einem Faulbehälter zugeführt, aus dem teilverfaulter Klärschlamm in die Stufe zur anaeroben Hochlastfaulung 13 zurückgeführt wird.

Ebenso erfolgt eine Rückführung einer Teilmenge von phosphathaltigen Gemischen, insbesondere MAP, von der mechanischen Trennstufe 14 in die anaerobe Hochlastfaulung 13, insbesondere um die Kristallisation zu verbessern.

In dem Verfahren gemäß Figur 2 und 3 wird somit von bereits ausgefaultem Klärschlamm aus der nachgeschalteten Faulung 11 eine Teilmenge in einem optimalen Verhältnis mit dem hydrolysierten Klärschlamm 3 vorzugsweise in einem separaten Behälter gemischt, so dass sich ein entsprechend hoher pH-Wert einstellt und auch eine zur MAP-Fällung ausreichende Menge Ammonium zur Verfügung steht. Die fehlende Menge an Magnesium-Ionen wird vorzugsweise als Magnesiumoxid oder Magnesiumhydroxid zugeführt.

Für den Fall, dass der für die MAP-Fällung notwendige pH-Wert im Bereich von 7,6 bis 8 nicht erreicht wird, kann durch Lufteinblasen (Ausstrippen von CO₂) oder Zugabe von Natronlauge eine pH-Erhöhung herbeigeführt werden.

Der in den Figuren 1 und 2 vorgesehene Kristallisator 4, der der Faulung 11 vorgeschaltet ist, bildet die MAP-Kristalle, die durch geeignete Maßnahmen abgetrennt werden können und nach entsprechender Reinigung einer weiteren Nutzung z. B. als Dünger zur Verfügung stehen. Das der Faulung 11 zugeleitete hydrolysierte und phosphatarme Klärschlammgemisch 10 ist durch diese Maßnahme so weit von Phosphat befreit, dass die unerwünschte Kristallisationen nicht mehr stattfinden und auch die Schlammeigenschaften in Bezug auf die Schlammentwässerung deutlich verbessert werden.

Alternativ zur Rückführung von ausgefaultem Klärschlamm können die Voraussetzungen zur MAP-Kristallisation auch durch Zugabe von bei der Schlammentwässerung anfallendem Schlammwasser erfolgen.

Eine andere Alternative ist in Figur 1 durch Zugabe von wässriger Ammonik-Lösung dargestellt. In beiden Fällen kann im Bedarfsfall durch Alkalizugabe der pH-Wert nach oben korrigiert werden. In dem Fall ist die Zugabe von Magnesium-Ionen als Metallsalz zur MAP-Fällung notwendig.

Die in Figur 3 dargestellte Ausführungsform, bei der die MAP-Fällung in einer Hochlast-anaerob-Stufe mit simultaner MAP-Fällung 13 durchgeführt wird, hat den Vorteil, dass gleichzeitig methanhaltiges Faulgas erzeugt wird. Die in dieser anaeroben Hochlaststufe 13 im Vergleich zum reinen Fällungsreaktor größere Aufenthaltszeit des Hydrolysats ermöglicht ergänzend die Erzeugung und Abtrennung von größeren, sedimentierbaren Kristallen. Weiterhin wird durch die teilweise Faulung des Hydrolysats 3 ausreichend Ammonium freigesetzt, so dass die Rückführung von Faulschlamm aus der Stufe der Faulung 11 minimiert werden kann. Ein weiterer Vorteil ist, dass durch den teilweisen Abbau der organischen Säuren, die bei der Hydrolyse 2 entstehen, bereits eine ausreichende pH-Verschiebung stattfindet.

Mit den drei Ausführungsformen lässt sich die Gewinnung von Phosphat als phosphathaltiges Gemisch MAP verbessern, wobei neben der erhöhten Ausbeute von MAP eine erhöhte Faulgasproduktion, eine erhöhte Energieeffizienz von Schlammvorbehandlungsmaßnahmen (u. a. mechanische und thermische, mit und ohne Kombination mit chemischer und enzymatischer Hydrolyse) sowie eine Minimierung des Chemikalieneinsatzes zur pH-Wert-Einstellung erreicht werden kann.

Durch die Zwischenschaltung der Abtrennung von Phosphat zwischen die Hydrolyse 2 und die Faulung 11 wird erreicht, dass die biologische Abbaubarkeit des Hydrolysats im Faulbehälter durch die vorhergehende MAP-Fällung verbessert wird. Zudem schafft die MAP-Fällung im Hydrolysat Spielraum für eine Temperaturabsenkung in der Hydrolyse 2 ohne Einbußen in der Faulgasausbeute. Hierdurch lässt sich der Anteil an schwer abbaubaren Stoffen, die z. B. bei der thermischen oder chemisch-thermischen Hydrolyse erzeugt werden, weiter minimieren. Weiterhin wird dadurch eine deutlich energieeffizientere und zunehmend materialschonende Hydrolyse 2 ermöglicht.

Grundsätzlich gibt es zwei Möglichkeiten der Abtrennung von Phosphat z. B. in Form des phosphathaltigen Gemisches MAP aus dem Hydrolysat. Einerseits kann dies aus Klärschlammgemisch oder andererseits aus Schlammwasser nach vorheriger Fest-Flüssig-Trennung erfolgen.

Das Abtrennen von MAP aus Schlammgemisch hat den Vorteil, dass das Verhältnis von Kristallstruktur zu Schlammpartikelstruktur bei der MAP-Fällung im Hydrolysat eine verbesserte maschinelle MAP-Kristallabtrennung z. B. mittels Zentrifugendekanter aus dem Schlammgemisch und damit eine höhere Ausbeute ermöglicht. Weiterhin werden Störfelder in der maschinellen MAP-Abtrennung vermieden, da die Kristallstruktur im Vergleich zur MAP-Fällung nach der Faulung 11 relativ fein ist und keine großen Kristalle gezüchtet werden.

Die Abtrennung von MAP aus Schlammwasser hat den Vorteil, dass eine dem Bedarf angepasste Kristallgröße gezüchtet werden kann. Dies bietet die Möglichkeit einer einfachen Sedimentation oder Filtration der abzutrennenden Kristalle. Im Vergleich zur Fällung nach der Faulung 11 ist ebenfalls eine relativ feine und homogene Kristallstruktur erzeugbar, wodurch die Abtrenneffizienz begünstigt wird. Zudem können weitgehend saubere Kristalle gewonnen werden, die keiner zusätzlichen Aufbereitung bedürfen.

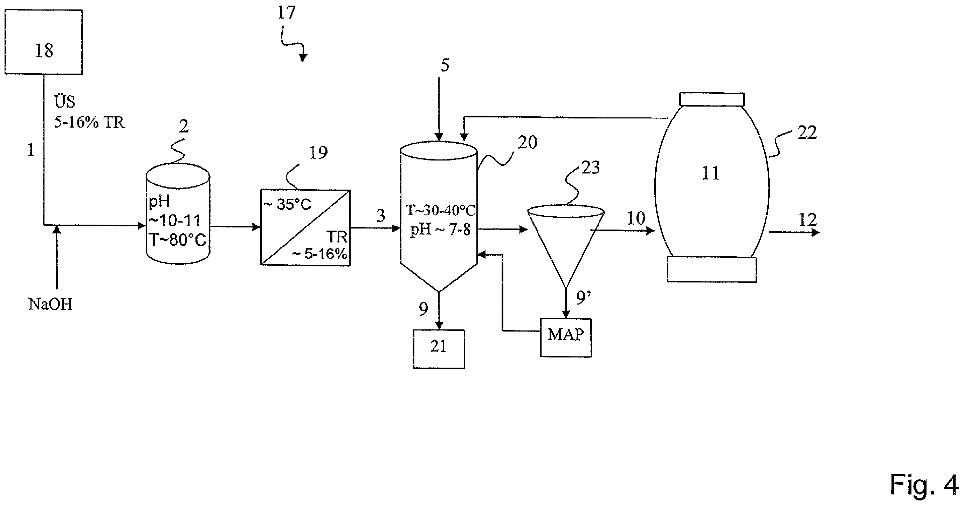

Figur 4 lässt eine erste Ausführungsform einer Abwasserbehandlungsanlage 17 zur Behandlung von Klärschlämmen in Form von Überschussschlamm erkennen. Dabei ist eine Vorrichtung 18 zur Eindickung von Überschussschlamm ÜS vorgesehen. Am Ausgang der Vorrichtung 18 liegt Überschussschlamm mit einem Trockenrückstand TR im Bereich von etwa 5 bis 16 % vor. Dem eingedickten Überschussschlamm wird Natronlauge NaOH zugeführt, um einen pH-Wert von etwa 10 bis 11 zu erreichen. Der so aufbereitete Überschussschlamm wird dann einem Hydrolysereaktor 2 zugeführt, in dem eine chemisch-/thermische Hydrolyse bei einem pH-Wert von etwa 11 und einer Temperatur von ca. 80°C durchgeführt wird. Geeignet hierfür ist z. B. das sog. Pondus-Verfahren. Nach Abkühlung des hydrolysierten Klärschlamms 3 in einer Kühlvorrichtung 19 auf eine Temperatur von etwa 30°C bis 40°C wird der hydrolysierte Klärschlamm 3 einem Fällungsreaktor 20 zugeführt, in dem eine Kristallisation von Magnesium-Ammonium-Phosphat (MAP) und eine MAP-Abscheidung bei einer Temperatur im Bereich von 30°C bis 40°C und einem pH-Wert von mehr als 7 und vorzugsweise etwa 7,5 bis 8,5 durchgeführt wird. Das abgeschiedene phosphathaltige Gemisch 9 in Form von MAP wird anschließend in einer Aufbereitungseinheit 21 z. B. einer MAP-Wäsche zugeführt.

Um die Kristallisation und Abscheidung von MAP zu ermöglichen, wird Fällmittel 5 z. B. in Form von Magnesiumchlorid MgCl₂ zugeführt.

Weiterhin wird eine Teilmenge von mindestens teilweise verfaultem Klärschlamm aus einem nachfolgenden Faulbehälter 22 für das hydrolysierte und um Phosphat reduzierte Klärschlamm in den Fällungsreaktor 20 vorgesehen. Die Rückführung von Faulschlamm erfolgt vorzugsweise bei einer Temperatur von etwa 35°C bis 40°C und bevorzugt etwa 37°C.

An den Ausgang des Fällungsreaktors 20 ist eine Fest-/Flüssig-Trennstufe 23 (z.B. eine Zentrifuge) geschaltet, in dem feinkörniges MAP 9' gewonnen und in den Fällungsreaktor 20 zurückgeführt wird. Diese zweite Sedimentation führt zur Erhöhung der Ausbeute von MAP durch Verbesserung der Kristallisation im Fällungsreaktor 20.

Der nach der Faulung 11 gewonnene Faulschlamm 12 kann dann einer weiteren Verarbeitung z. B. durch Entwässerung unterzogen werden.

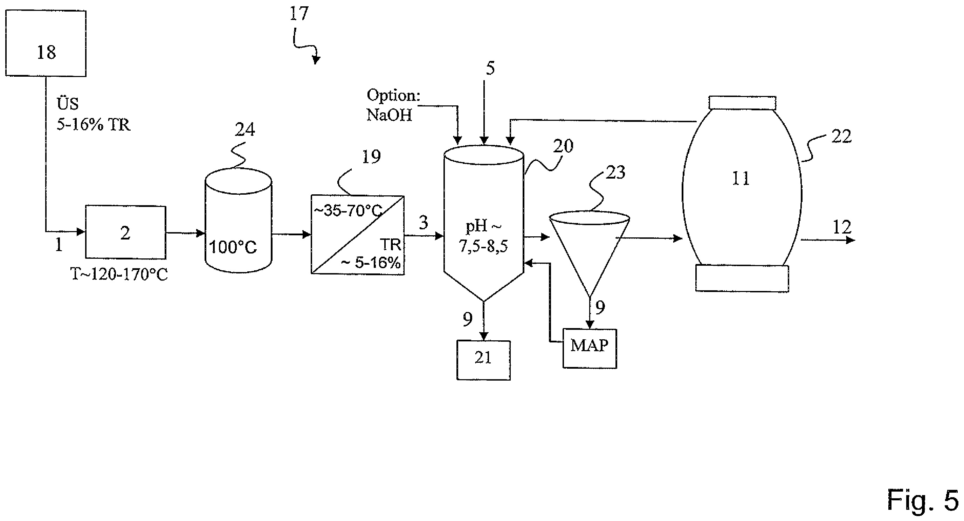

Figur 5 lässt eine zweite Ausführungsform einer Abwasserbehandlungsanlage 17 erkennen, bei der wiederum Überschussschlamm in einer Vorrichtung 18 auf einen Trockenrückstand von 5 bis 16 % eingedickt wird. Dieser Klärschlamm 1 in Form solchermaßen eingedickten Überschussschlamms ÜS wird in einem Hydrolysereaktor 2 der thermischen Hydrolyse bei einer Temperatur von 120-160°C unterzogen. Bei der Wärmebehandlung entsteht im Hydrolysat ortho-Phosphat. Der hydrolysierte Klärschlamm wird nach einer Zwischenlagerung 2 bei 100°C in einer Kühlvorrichtung 19 auf ca. 35°C bis 70°C herabgekühlt. Der Trockenrückstand TR des hydrolysierten Klärschlamms 3 beträgt ca. 5 bis 16 %. Der hydrolysierte Klärschlamm 3 wird dann in einen Fällungsreaktor 20 eingegeben, indem die Kristallisation und Abscheidung von Phosphat insbesondere als phosphathaltiges Gemisch MAP erfolgt. Zur Einstellung des zur MAP-Fällung erforderlichen pH-Wertes auf ca. 7,5 bis 8,5 wird ggf. Natronlauge NaOH in den Fällungsreaktor 20 zugegeben. Weiterhin erfolgt eine Zugabe von Fällmittel, z. B. in Form von Magnesiumchlorid MgCl₂ oder Magnesiumoxid MgO bzw. von Magnesiumhydroxid Mg(OH)₂.

Weiterhin erfolgt eine Rückführung von mindestens teilweise verfaultem Klärschlamm aus dem Schritt der Faulung 11 im Faulbehälter 22.

In einer dem Fällungsreaktor 20 nachgeschalteten Fest-/Flüssig-Trennstufe 23 wird z. B. mit einer Sedimentation eine weitere Abtrennung von MAP-Kristallen vorgenommen, die dem Fällungsreaktor 20 wieder zugeführt werden.

Das im Fällungsreaktor 20 gewonnene MAP kann in der Ausführungsform gemäß Figur 5 einer weiteren Verarbeitung z. B. durch MAP-Wäsche unterzogen werden.

Der Faulschlamm 12 aus dem Faulbehälter 22 kann einer Entwässerung oder anderweitiger Weiterverarbeitung unterzogen werden.

Die Abwasserbehandlungsanlage 17 in der Figur 4 sieht eine Hydrolyse bei erhöhter Temperatur von größer als 60°C, bevorzugt im Bereich von 70°C bis 80°C, und bei erhöhten pH-Werten von mehr als 8, bevorzugt im Bereich von 10 bis 12 , bzw. in Figur 5 eine Hydrolyse bei erhöhter Temperatur von größer 100°C, bevorzugt 120°C bis 170°C, vor. Anschließend erfolgt dann vor der Verfaulung die Reduktion des Phosphatanteils.

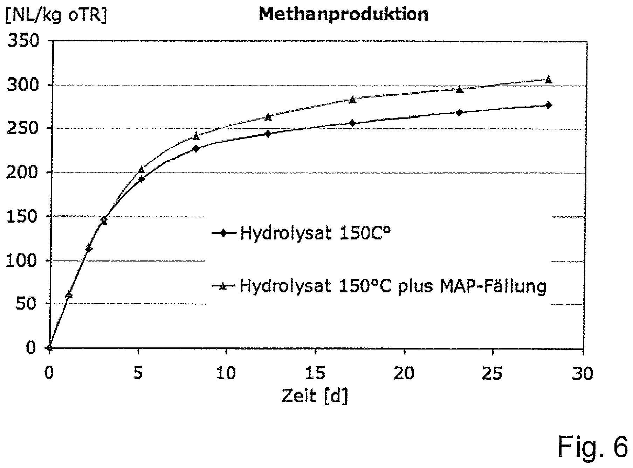

Figur 6 zeigt ein Diagramm der Ausbeute von Methangas über die Zeit d in Tagen mit und ohne vorhergehende Ausfällung von MAP. Es wird deutlich, dass die im NL/kg oTR, d. h. in Normliter Methan pro Kilogramm organischer Trockensubstanz bei der Verfaulung gemessene Methangasausbeute aus thermisch bei 150°C hydrolysiertem Schlamm (Hydrolysat) überraschend ca. 12 % höher ist, wenn das Hydrolysat eine Magnesium-Ammonium-Phosphat (MAP)-Fällung vor der Verfaulung erfährt.

## Patentansprüche

1. Verfahren zur Behandlung von Klärschlamm mit den Behandlungsschritten der Hydrolyse (2) des Klärschlamms (1) und der Faulung (11) des der Hydrolyse (2) unterzogenen hydrolysierten Klärschlamms (10) zur anaeroben Behandlung des Klärschlamms (1), sowie mit einem Schritt des Ausfällens (4) von Phosphat aus dem mindestens teilweise behandelten Klärschlamm (3), wobei das Ausfällen (4) von Phosphat nach dem Behandlungsschritt der Hydrolyse (2) und vor dem Behandlungsschritt der Faulung (11) des hydrolysierten Klärschlamms (3) erfolgt, und wobei der durch das Ausfällen (4) von Phosphat um diesen abgetrennten Phosphatanteil verminderte Klärschlamm (10) der anaeroben Behandlung durch Faulung (11) zugeführt wird, **dadurch gekennzeichnet, dass** das Ausfällen (4) von Phosphat aus einem Klärschlammgemisch oder aus Schlammwasser als Flüssigphase nach einer vorhergehenden Trennung von Fest- und Flüssigphase aus dem Klärschlamm (3) unter Zugabe von Fällmittel (5) erfolgt und dass ein Rückführen einer Teilmenge von mindestens teilweise anaerob im Schritt der Faulung (11) behandelten Klärschlamms zu dem hydrolysierten Klärschlamm (3) vor oder während des Behandlungsschritts des Ausfällens (4) von Phosphat zur Erhöhung des Ammonium-Gehaltes des hydrolysierten Klärschlammes (3) und Anhebung des pH-Wertes des hydrolysierten Klärschlammes (3) für den Schritt des Ausfällens (4) von Phosphat erfolgt.

2. Verfahren nach Anspruch 1, **dadurch gekennzeichnet, dass** das Ausfällen (4) von Phosphat unter Zugabe von Metallsalzen, insbesondere von magnesiumhaltigen Fällmittel, zu dem hydrolysierten Klärschlamm (3) erfolgt.

3. Verfahren nach Anspruch 1 oder 2, **dadurch gekennzeichnet, dass** das Ausfällen (4) von Phosphat durch Fällen von Magnesium-Ammonium-Phosphat aus dem hydrolysierten Klärschlamm (3) erfolgt.

4. Verfahren nach einem der Ansprüche 1 bis 3, **gekennzeichnet durch** Rückführen von einer Teilmenge von abgetrennter Flüssigphase des mindestens teilweise anaerob im Schritt der Faulung behandelten Klärschlamms.

5. Verfahren nach einem der vorhergehenden Ansprüche, **dadurch gekennzeichnet, dass** im Behandlungsschritt des Ausfällens (4) von Phosphat rückgelöstes Phosphat aus einem Klärschlammhydrolysat oder Schlammwasser als Flüssigphase nach einer vorhergehenden Trennung von Fest- und Flüssigphase aus dem Klärschlammhydrolysat abgetrennt wird.

6. Verfahren nach einem der vorhergehenden Ansprüche, **dadurch gekennzeichnet, dass** der den Behandlungsschritten der Hydrolyse (2), des Ausfällens (4) von Phosphat und der Faulung (11) unterzogene Klärschlamm Überschussschlamm und/oder Primärschlamm ist.

7. Verfahren nach einem der vorhergehenden Ansprüche, **gekennzeichnet durch** Hydrolyse (2) des Klärschlamms derart, dass der pH-Wert des hydrolysierten Klärschlamms (3) mehr als 7 beträgt und bevorzugt im Bereich von 10 bis 12 liegt, und/oder das die Temperatur des hydrolysierten Klärschlamms (3) bei der Hydrolyse (2) mehr als 60°C beträgt und bevorzugt im Bereich von 70°C bis 90°C liegt.

8. Verfahren nach Anspruch 7, **gekennzeichnet durch** Hydrolysebehandlung des Klärschlamms derart, dass die Temperatur des hydrolysierten Klärschlamms (3) bei der Hydrolyse mehr als 100°C beträgt und bevorzugt im Bereich von 120°C bis 170°C liegt.

9. Abwasserbehandlungsanlage (17) zur Behandlung von Klärschlämmen (1) mit dem Verfahren nach einem der vorhergehenden Ansprüche mit einer Hydrolysevorrichtung (2) zur Hydrolysebehandlung von Klärschlamm, einem Faulbehälter (22) zur anaeroben Behandlung von Klärschlamm durch Faulung, und mit einem Fällungsreaktor (20) zum Ausfällen von Phosphat aus dem Klärschlamm, wobei der Fällungsreaktor (20) so zwischen die Hydrolysevorrichtung (2) und den Faulbehälter (22) geschaltet ist, dass Phosphat aus dem hydrolysierten Klärschlamm (3) abgezogen und der durch das Ausfällen von Phosphat um diesen abgetrennten Phosphatanteil verminderte Klärschlamm (10) der anaeroben Behandlung durch Faulung (11) zugeführt wird, **dadurch gekennzeichnet, dass** die Abwasserbehandlungsanlage (17) zum Ausfällen von Phosphat aus einem Klärschlammgemisch oder aus Schlammwasser als Flüssigphase nach einer vorhergehenden Trennung von Fest- und Flüssigphase aus dem Klärschlamm unter Zugabe von Fällmittel (5) und zum Rückführen einer Teilmenge von mindestens teilweise anaerob im Schritt der Faulung (11) behandelten Klärschlamms zu dem hydrolysierten Klärschlamm (3) vor oder während des Behandlungsschritts der Fällung (4) von Phosphat zur Erhöhung des Ammonium-Gehaltes des hydrolysierten Klärschlammes (3) und Anhebung des pH-Wertes des hydrolysierten Klärschlammes (3) für den Schritt der Fällung (4) von Phosphat eingerichtet ist.

## Claims

1. Method for treating sewage sludge, comprising the treatment steps of hydrolysis (2) of the sewage sludge (1) and of digestion (11) of the hydrolyzed sewage sludge (10), subjected to the hydrolysis (2), in order to anaerobically treat the sewage sludge (1), and also comprising a step of precipitation (4) of phosphate from the at least partially treated sewage sludge (3), wherein the precipitation (4) of phosphate is carried out after the treatment step of hydrolysis (2) and before the treatment step of digestion (11) of the hydrolyzed sewage sludge (3), and wherein the sewage sludge (10) reduced as a result of the precipitation (4) of phosphate by this removed proportion of phosphate being fed to the anaerobic treatment by digestion (11), **characterized in that** the precipitation (4) of phosphate from a sewage sludge mixture or sludge water as liquid phase is performed after a preceding separation of solid phase and liquid phase from the sewage sludge (3) and by adding of precipitant (5), and that recirculation of a subquantity of sewage sludge treated at least semianaerobically in the step of digestion (11) to the hydrolyzed sewage sludge (3) before or during the treatment step of precipitation (4) of phosphate in order to increase the ammonium content of the hydrolyzed sewage sludge (3) and to raise the pH-value of the hydrolyzed sewage sludge (3) for the step of precipitation (4) of phosphate is performed.

2. Method as claimed in claim 1, **characterized in that** the precipitation (4) of phosphate is achieved with the addition of metal salts, more particularly precipitant comprising magnesium, to the hydrolyzed sewage sludge (3).

3. Method as claimed in claim 1 or 2, **characterized in that** the precipitation (4) of phosphate is achieved by precipitating magnesium ammonium phosphate from the hydrolyzed sewage sludge (3).

4. Method as claimed in one of the claims 1 to 3, **characterized by** recirculation of a subquantity of removed liquid phase of the sewage sludge treated at least semianaerobically in the step of digestion.

5. Method as claimed in any of the preceding claims, **characterized in that** in the treatment step of precipitation (4) of phosphate, redissolved phosphate is removed from a sewage sludge hydrolysate or sludge water as liquid phase after a preceding separation of sold phase and liquid phase from the sewage sludge hydrolysate.

6. The method as claimed in any of the preceding claims, **characterized in that** the sewage sludge subjected to the treatment steps of hydrolysis (2), of precipitation (4) of phosphate and of digestion (11) is surplus sludge and/or primary sludge.

7. Method as claimed in any of the preceding claims, **characterized in that** the hydrolysis (2) of sewage sludge is set up in such a way that the pH-value of the hydrolyzed sewage sludge (3) is more than 7 and is preferably in the range of 10 to 12, and/or that the temperature of the hydrolyzed sewage sludge (3) during the hydrolysis is more than 60°C and is preferably in the range of 70°C to 90°C.

8. Method as claimed in claim 7, **characterized by** hydrolysis treatment of sewage sludge in such a way that the temperature of the hydrolyzed sewage sludge (3) during the hydrolysis is more than 100°C and is preferably in the range of 120°C to 170°C.

9. A wastewater treatment plant (17) for treating sewage sludges (1) using the method as claimed in any of the preceding claims, comprising a hydrolysis apparatus (2) for the hydrolysis treatment of sewage sludge, a digestion vessel (22) for the anaerobic treatment of sewage sludge by digestion, and comprising a separation apparatus (20) for the precipitation of phosphate from the sewage sludge, wherein the separation apparatus (20) is connected between the hydrolysis apparatus (2) and the digestion vessel (22) so, that phosphate is substracted from the hydrolyzed sewage sludge (3) and the sewage sludge (10) reduced as a result of the precipitation of phosphate by this removed proportion of phosphate is fed to the anaerobic treatment by digestion (11), **characterized in that** the wastewater treatment plant (17) is arranged for precipitation of phosphate from a sewage sludge mixture or sludge water as liquid phase after a preceding separation of sold phase and liquid phase from sewage sludge by adding of precipitant (5) and for increasing the ammonium content of the hydrolyzed sewage sludge (3) and raising the pH-value of the hydrolyzed sewage sludge (3) for the step of precipitation (4) of phosphate.

## Revendications

1. Procédé de traitement de boues résiduaires comprenant les étapes de traitement d'hydrolyse (2) des boues résiduaires (1) et de digestion (11) des boues résiduaires hydrolysées (10) soumises à l'hydrolyse (2) pour le traitement anaérobie des boues résiduaires (1), ainsi que comprenant une étape de précipitation (4) de phosphate à partir des boues résiduaires au moins partiellement traitées (3), la précipitation (4) de phosphate ayant lieu après l'étape de traitement d'hydrolyse (2) et avant l'étape de traitement de digestion (11) des boues résiduaires hydrolysées (3), et les boues résiduaires (10) diminuées de cette fraction de phosphate séparée par la précipitation (4) de phosphate étant introduites dans le traitement anaérobie par digestion (11), **caractérisé en ce que** la précipitation (4) de phosphate a lieu à partir d'un mélange de boues résiduaires ou à partir d'une eau boueuse en tant que phase liquide après une séparation préalable d'une phase solide et liquide des boues résiduaires (3) avec ajout d'agents de précipitation (5), et **en ce qu'**un recyclage d'une partie des boues résiduaires au moins partiellement traitées anaérobiquement à l'étape de digestion (11) dans les boues résiduaires hydrolysées (3) a lieu avant ou pendant l'étape de traitement de précipitation (4) de phosphate pour augmenter la teneur en ammonium des boues résiduaires hydrolysées (3) et augmenter le pH des boues résiduaires hydrolysées (3) pour l'étape de précipitation (4) de phosphate.

2. Procédé selon la revendication 1, **caractérisé en ce que** la précipitation (4) de phosphate a lieu avec ajout de sels métalliques, notamment d'agents de précipitation contenant du magnésium, aux boues résiduaires hydrolysées (3).

3. Procédé selon la revendication 1 ou 2, **caractérisé en ce que** la précipitation (4) de phosphate a lieu par précipitation de phosphate de magnésium-ammonium à partir des boues résiduaires hydrolysées (3).

4. Procédé selon l'une quelconque des revendications 1 à 3, **caractérisé par** un recyclage d'une partie de la phase liquide séparée des boues résiduaires au moins partiellement traitées anaérobiquement à l'étape de digestion.

5. Procédé selon l'une quelconque des revendications précédentes, **caractérisé en ce qu'**à l'étape de traitement de précipitation (4) de phosphate, le phosphate redissous est séparé d'un hydrolysat de boues résiduaires ou d'une eau boueuse en tant que phase liquide après une séparation préalable d'une phase solide et liquide de l'hydrolysat de boues résiduaires.

6. Procédé selon l'une quelconque des revendications précédentes, **caractérisé en ce que** les boues résiduaires soumises aux étapes de traitement d'hydrolyse (2), de précipitation (4) de phosphate et de digestion (11) sont des boues excédentaires et/ou des boues primaires.

7. Procédé selon l'une quelconque des revendications précédentes, **caractérisé par** une hydrolyse (2) des boues résiduaires telle que le pH des boues résiduaires hydrolysées (3) soit supérieur à 7 et se situe de préférence dans la plage allant de 10 à 12, et/ou que la température des boues résiduaires hydrolysées (3) lors de l'hydrolyse (2) soit supérieure à 60 °C et se situe de préférence dans la plage allant de 70 °C à 90 °C.

8. Procédé selon la revendication 7, **caractérisé par** un traitement d'hydrolyse des boues résiduaires tel que la température des boues résiduaires hydrolysées (3) lors de l'hydrolyse soit supérieure à 100 °C et se situe de préférence dans la plage allant de 120 °C à 170 °C.

9. Unité de traitement d'eaux résiduaires (17) pour le traitement de boues résiduaires (1) par le procédé selon l'une quelconque des revendications précédentes, comprenant un dispositif d'hydrolyse (2) pour le traitement d'hydrolyse de boues résiduaires, un contenant de digestion (22) pour le traitement anaérobie de boues résiduaires par digestion, et comprenant un réacteur de précipitation (20) pour la précipitation de phosphate à partir des boues résiduaires, le réacteur de précipitation (20) étant raccordé entre le dispositif d'hydrolyse (2) et le contenant de digestion (22) de sorte que du phosphate soit extrait des boues résiduaires hydrolysées (3) et les boues résiduaires (10) diminuées de cette fraction de phosphate séparée par la précipitation de phosphate soient introduites dans le traitement anaérobie par digestion (11), **caractérisée en ce que** l'unité de traitement d'eaux résiduaires (17) est conçue pour la précipitation de phosphate à partir d'un mélange de boues résiduaires ou d'une eau boueuse en tant que phase liquide après une séparation préalable d'une phase solide et liquide à partir des boues résiduaires avec ajout d'agents de précipitation (5) et pour le recyclage d'une partie des boues résiduaires au moins partiellement traitées anaérobiquement à l'étape de digestion (11) dans les boues résiduaires hydrolysées (3) avant ou pendant l'étape de traitement de précipitation (4) de phosphate pour augmenter la teneur en ammonium des boues résiduaires hydrolysées (3) et augmenter le pH des boues résiduaires hydrolysées (3) pour l'étape de précipitation (4) de phosphate.
